# EUROPEAN PATENT APPLICATION

(11) **EP 3 431 240 A1**
(43) Date of publication of application: **23.01.2019**
(21) Application number: 18184345.9
(22) Date of filing: 19.07.2018
(51) Int. Cl.: B28D 1/04, B26F 3/00, C03B 33/02, B28D 7/04, B23Q 1/01

(54) **A CUTTING APPARATUS FOR SLAB MATERIAL**

(30) Priority: 19.07.2017 IT 201700082011
(71) Applicant: Prussiani Engineering S.P.A., 24061 Albano Sant'Alessandro (BG) (IT)
(72) Inventor: PRUSSIANI, Mario Giorgio, 24021 ALBINO (BG) - IT (IT)
(74) Representative: Ripamonti, Enrico

(57) **Abstract**

A cutting apparatus (10) for slab materials, specially suitable for cutting and/or shaping slabs made from a stone material such as marble, granite or the like including, for instance, glass and the like of equal or different thicknesses, comprising a first machining station (16) and a second machining station (17) arranged adjacent to each other in line according to a longitudinal direction of development, a portal structure (14) rigidly secured to the ground being put above them, and a carriage (42) comprising a machining head (48) movable along said portal structure (14) between said first machining station (16) and said second machining station (17) defining, in an alternating manner, a loading and machining station for a slab in one working cycle in masked time.

## Description

The present invention refers to a cutting apparatus for slab materials.

More specifically, the present invention refers to a cutting apparatus for slab materials and specially suitable for cutting and shaping slabs made from a stone material such as marble, granite, or the like including, for instance, glass and the like of equal or different thicknesses.

It is known that circular saw blades of a diamond type or water cutting (typically referred to as "waterjet") technology or other known technologies are used to cut slabs made from a stone material or of another type as mentioned above.

Cutting machines are also known that use the above mentioned cutting techniques and perform an axis interpolation cutting, to be able to implement complex outlines which comprise linear and curvilinear trajectories featuring highly improved operating times and final results as compared to cutting machines that do not use interpolated axes.

Cutting machines are also known which combine circular saw cutting with waterjet cutting, with or without an abrasive material, also of the interpolated axes type, and such as to allow for using the most appropriate technology depending on which cutting type is the most appropriate for the slab being machined, or which allow to use, for instance, a circular saw blade for given types of cutting (rectilinear or circular cutting) and waterjet cutting for more complex cuttings requiring more accurate profiles or for implementing inner angled cuttings that cannot be implemented by using a circular saw blade.

The known machines as mentioned above, be they of the circular saw blade type or of the waterjet type or even of a type comprising a combined circular saw blade and waterjet cutting, comprise a movable portal structure which performs a translatory movement by way of guides, a machining bench or plane over which the slab to be cut is positioned, and a movable cutting head on the portal structure provided with the above described cutting means, said cutting head possibly being of a multi-axis type.

According to other alternative and known embodiments, the cutting head is cantilevered and movable with respect to guides that, as in the previous case, are arranged on the ground.

The slabs are loaded onto the machining plane manually, by accessing the working area or automatically or semi-automatically by way of the same machining plane being movable with respect to guides and suitable for entering/leaving the cutting head working area.

However, such known solutions feature a number of major drawbacks bound to the fact that the cutting head can be arranged with respect to a movable support structure by way of guides mounted on the ground which, as known, determine structural stability problems in the cutting head, which is subject to greater vibrations during machining, which consequently affects the quality of the machining itself; such problems are experienced not only in the case that the cutting head is arranged along grounded guides with respect to a movable portal structure, but also in the case of a cutting head cantilevered and movable with respect to grounded guides.

A further drawback of such traditional solutions is in that the portal structure with grounded guided limits and makes it more difficult the access and ease of movement for the operators who are operating in the working area to perform their tasks in loading/unloading the slabs to be machined or the machined pieces.

A further drawback of the traditional apparatuses is bound to the space occupations and interferences created by the cutting head support and handling structures with respect to any devices used to automatically or semi-automatically load the slabs to be cut.

A further drawback is related to safety, in that an operator is obliged to operate close to apparatuses that have big dimensions and are movable and consequently dangerous.

An object of the present invention is to obviate the above-mentioned drawbacks.

More specifically, an object of the present invention is to provide a cutting apparatus for stone materials that does not feature such overall dimensions during their movements as to limit operator's access and freedom of movement during the loading/unloading steps.

A further object of the present invention is to provide such cutting head support structure as not to generate structural stability problems for the cutting head and consequently not to cause vibrational conditions to occur to onto the cutting head and consequently such as not to jeopardize the optimum quality of machining.

A further object of the present invention is to provide a cutting apparatus that does not entail overall dimensions and interference problems for slab loading devices.

A further object of the invention is to provide a cutting apparatus suitable for guaranteeing an optimum and high safety for operators.

A further object of the present invention is to put at users' disposal a cutting apparatus suitable for guaranteeing high strength and reliability over time and also such as to be easily and cost-effectively implemented.

These and others objects are achieved by the invention that presents the characteristics according to claim 1.

According to the invention, there is provided a cutting apparatus for slab materials, specially suitable for cutting and/or shaping slabs made from a stone material such as marble, granite or the like including, for instance, glass and the like with equal or different thicknesses, comprising a first machining station and a second machining station arranged adjacent to each other in line according to a longitudinal direction of development, a portal structure rigidly secured to the ground being placed above them and a carriage comprising a machining head which moves along said portal structure between said first and second machining stations.

The constructional and functional characteristics of the cutting apparatus for stone materials according to the present invention can be better understood from the following detailed description wherein reference will be made to the attached drawings which illustrate a preferred but non-limitative embodiment thereof, and wherein:
figure 1 schematically shows an axonometric view of a cutting apparatus for stone materials according to the invention;
figure 2 schematically shows a side view of the cutting apparatus according to the invention.

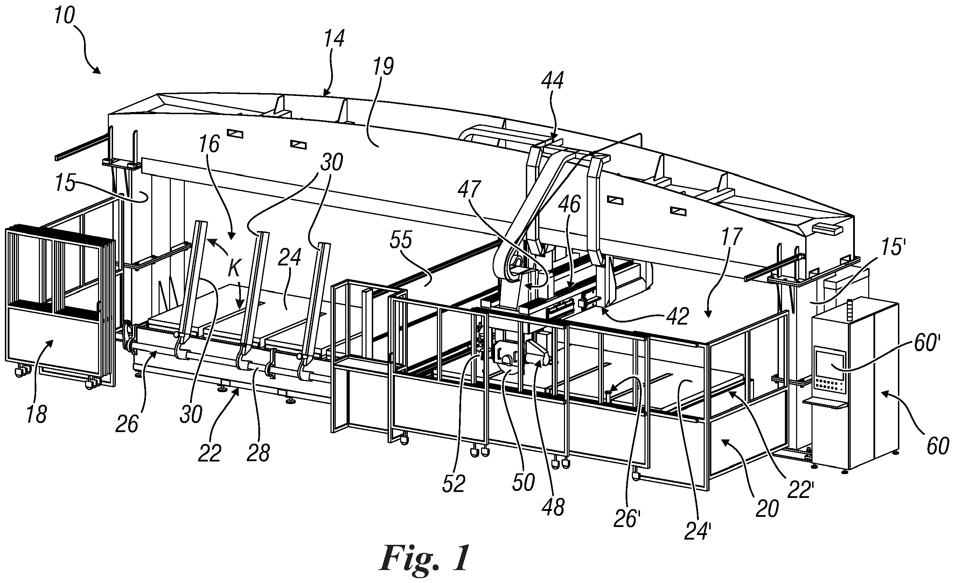

The cutting apparatus for stone materials according to the present invention, identified by the reference numeral 10 as a whole in figure 1, comprises a portal structure 14 which is placed above a first machining station 16 and a second machining station 17 arranged adjacent to each other, said apparatus also comprising protection elements 18 and 20 consisting, for instance, of movable walls and the function of which is to delimit the working area of the first machining station 16 and of the second machining station 17, to prevent said working areas from being accessed during the machining operations, and to allow the same working areas to be accessed for loading/unloading the material to be machined or the machined material and/or to enable an operator in charge of performing control, maintenance, or repair operations or the like to access them.

The portal structure 14 comprises two opposed and parallel shoulders 15 and 15' rigidly bound to the ground and an upper cross member 19 secured to said shoulders above and transversally thereto on the opposite side with respect to that where they are secured to the ground.

Below said portal structure 14 there are arranged, as previously mentioned, a first machining station 16 and a second machining station 17 adjacent to each other and arranged one after the other according to the longitudinal direction of development of the upper cross member 19 of said portal structure 14.

The first machining station 16 comprises a basin 22 on the upper front of which, opposed to that which is in contact with the ground, there is positioned a loading plane 24 suitable for supporting a slab to be cut-machined and the like, and a loading device 26 the function of which is to load the mentioned slab onto the loading plane 24; more specifically, the function of the loading device 26 is to receive a slab to be machined oriented according to a vertical plane and to lay it down onto the loading plane 24 as described below, said slab being arranged on said loading device 26 by an operator or by a handler.

The loading device 26, not described here in details because it is known, comprises a bar 28 arranged according to the longitudinal direction of development of the basin 22 and rotatably arranged with respect thereto (rotation is controlled by an electric motor or by a hydraulic or pneumatic actuator) and with respect to which two or more arms 30, parallel and developing according to the transversal direction of the basin 22, are stabilized.

The second machining station 17 is fully similar to the first machining station 16 and also comprises a basin 22' provided with a loading plane 24' on the upper front opposed to the contact with the ground, suitable for supporting a slab to be machined.

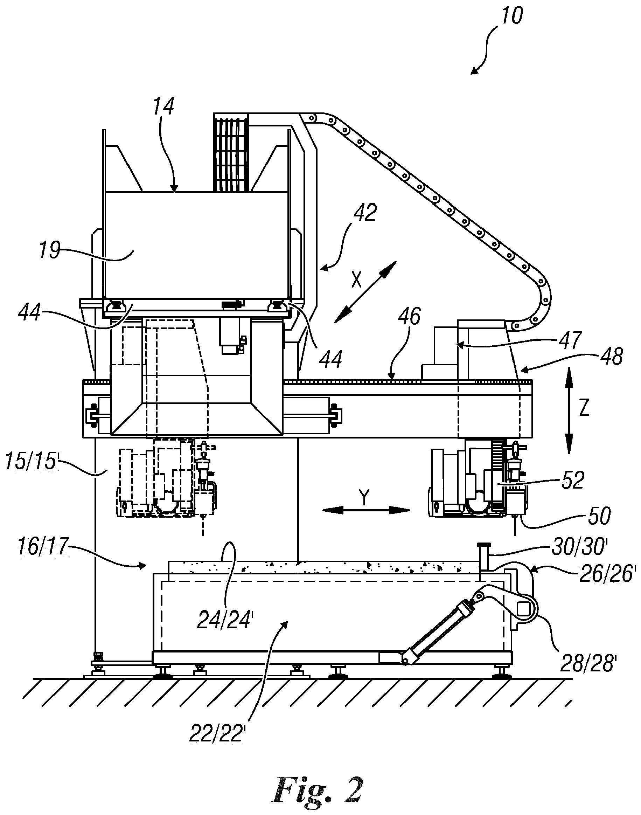

On the upper cross member 19 of the portal structure 14 there is arranged a carriage 42 movable along said upper cross member 19 by way of guide elements 44 (the arrow X in the figure indicates the direction of the forward/backward movement of the carriage 42) arranged in the lower part of the upper cross member and according to the longitudinal direction of development thereof, said carriage 42 supporting a machining head 48 movable with respect to the carriage according to a horizontal direction (the longitudinal direction of development of the carriage 42) perpendicular to the longitudinal direction of development of the upper cross member 19, as indicated by the arrow Y (said direction being perpendicular to the direction X as mentioned above) by way of guides 46 and according to a vertical direction (as indicated by the arrow Z in figure 2) by way of further guides (not shown in the figure).

The machining head 48 comprises cutting means consisting of a circular saw blade 50 and a waterjet cutting device 52, rotatable and tiltable with respect to said machining head 48 of the carriage 42 by way of traditionally known actuator devices not described here (in order for making it possible to follow interpolated trajectories).

The first machining station 16 and the second machining station 17 are separated by a bulkhead 55, movable according to a vertical direction or overturnable, to make it possible a translatory movement of the carriage 42 along the upper cross member 19 of the portal structure 14, as detailed below.

The bulkhead 55 and the protection elements 18 define the working area of the first machining station 16, whereas said bulkhead 55 and the protection elements 20 define the working area of the second machining station 17.

The cutting apparatus according to the invention also comprises a control unit 60 equipped with an interface 60' by means of which an operator can manage and control the working cycle of the apparatus.

The operation of the cutting apparatus according to the invention described in details here above with reference to one embodiment thereof, provided for explanatory purposes only, is described below.

A slab made from a stone or glass material or a similar material is loaded, either manually or automatically (for instance, by way of a robot or the like), in either machining station 16 or 17 and, specifically, for its loading onto the loading plane 24 or 24', said slab is positioned with a front leaning on the arms 30 of the loading device 26 or 26' which, during the loading step, are in an inclined and substantially vertical position with respect to the loading plane 24 or 24', and are subsequently brought to a horizontal position (as indicated by the arrow K in figure 1) to have the slab completely leaning on said loading plane 24 or 24'.

Assuming, for explanatory and descriptive purposes only, the slab has been positioned on the loading plane 24, the carriage 42 will move (by way of a translatory movement along the upper cross member 19) and stop at the first machining station 16 to perform cutting operations by way of the cutting means of the machining head 48, the movable bulkhead 55 being re-positioned to separate the first and second machining stations (in order to prevent splinters, dust, splashes, and the like resulting from the machining from entering the loading station); simultaneously, while a cutting operation is in progress in the first machining station 16, a second slab to be cut is loaded onto the loading plane 24' in the second machining station 17.

Having ended the machining step in the first machining station 16, the bulkhead 55 lowers down and the carriage 42 undergoes a translatory movement in the direction of the second machining station 17 to be put in a position to machine the slab loaded thereonto and simultaneously, the machined slab is unloaded and a new slab to be machined is loaded in the first machining station 16.

The advantages achieved with a cutting apparatus for stone materials according to the present invention are apparent from the foregoing.

A cutting apparatus for stone materials according to the invention advantageously makes it possible to machine slabs accurately and precisely and with a high degree of quality, thanks to the fact that the structure of the apparatus, having a loading or machining head movable with respect to a portal structure as described above, features a high stability, whereby not vibrations occur which might result in inaccuracies and/or errors in the machining operations.

A further advantage of the apparatus according to the invention is in that it allows to perform a working cycle in masked time, considering that, while a slab is being machined in one machining station, a further slab is loaded onto the other machining station or a machined slab is unloaded from the machining station that is not involved in a cutting operation.

Further advantageous is the fact that an apparatus according to the invention makes it possible to perform both circular saw blade and waterjet cutting operations internally to one and the same production cycle; more specifically, one slab might be loaded onto one machining station to perform, for instance, a circular saw blade cutting operation and another slab might be loaded onto the other machining station to perform a waterjet cutting operation thereon, which entails advantages in terms of production times and related costs.

A further advantage of the present invention is in that the cutting apparatus does not entail overall dimensions and interference problems for the slab loading devices.

Further advantageous is the fact that the apparatus according to the invention provides optimum safety for operators.

Even though the invention has been described above with a special reference to one embodiment thereof, provided for explanatory non-limitative purposes only, numerous modifications and variants will be apparent to those skilled in the art in the light of the above description. Therefore, the present invention is aimed at embracing any modifications and variants that fall in the scope of the following claims.

## Claims

1. A cutting apparatus (10) for slab materials, specially suitable for cutting and/or shaping slabs made from a stone material such as marble, granite, or the like including, for instance, glass and the like of equal or different thicknesses, **characterized in that** it comprises a first machining station (16) and a second machining station (17) arranged adjacent to each other in line according to a longitudinal direction of development, a portal structure (14) rigidly secured to the ground being placed above them, and a carriage (42) comprising a machining head (48) movable along said portal structure (14) between said first machining station (16) and said second machining station (17) defining, in an alternating manner, a loading/unloading and machining station for a slab in one working cycle in masked time.

2. The apparatus according to claim 1, **characterized in that** the portal structure (14) comprises two opposed and parallel shoulders (15, 15') rigidly bound to the ground, and an upper cross member (19) secured to said shoulders above and transversally thereto on the opposed side with respect to that where they are secured to the ground, said portal structure comprising driving means for driving the carriage (42) .

3. The apparatus according to claim 1 or 2, **characterized in that** the first machining station (16) and the second machining station (17) comprise a basin (22, 22') on the upper front of which, opposed to that which is in contact with the ground, there is positioned a loading plane (24, 24') suitable for supporting a slab to be subjected to a cutting machining or the like and a loading device (26, 26') for loading said slab onto said loading plane (24, 24').

4. The apparatus according to claim 3, **characterized in that** the loading device (26, 26') comprises a bar (28, 28') arranged according to the longitudinal direction of development of the basin (22, 22') and rotatably arranged with respect thereto and with respect to which two or more slab loading arms (30, 30'), parallel to each other and developing according to the transversal direction of the basin (22, 22'), are stabilized, said arms (30, 30') being displaceable upwards/downwards with respect to the loading plane (24, 24') of the basin (22, 22').

5. The apparatus according to claim 1, **characterized in that** the carriage (42) is translatorily movable along the upper cross member (19) of the portal structure (14) between the first machining station (16) and the second machining station (17) by way of guide elements (44) and comprises guides (46) for a translatory movement of the machining head (48) along a longitudinal direction of development of the carriage (42), the machining head (48) comprising further guides (47) for its movement along a vertical direction.

6. The apparatus according to claim 5, **characterized in that** the guide elements (44) are arranged in the lower part of the upper cross member (19) and according to the longitudinal direction of development of said upper cross member.

7. The apparatus according to one or several of the previous claims **characterized in that** the machining head comprises machining means consisting of a circular saw blade (50) and a waterjet cutting device (52).

8. The apparatus according to one or several of the previous claims, **characterized in that** it comprises a movable bulkhead (55) separating the first machining station (16) and the second machining station (17), said bulkhead (55) being in a lowered configuration for moving the carriage (42) between the first machining station (16) and the second machining station (17) and in an uplifted configuration to separate said first and second machining stations while a cutting machining is in progress in one machining station and a loading/unloading operation is in progress in the adjacent machining station.

9. The apparatus according to one or several of the previous claims, **characterized in that** it comprises a control unit (60) provided with an interface (60') for managing and controlling the working cycle of the apparatus itself.

10. The apparatus according to one or several of the previous claims, **characterized in that** it comprises protection elements (18, 20) consisting of movable walls which, together with the bulkhead (55), delimit the working areas of the machining station (16) and of the machining station (17) respectively.
